# EUROPÄISCHE PATENTSCHRIFT

(11) **EP 4 009 479 B1**
(45) Veröffentlichungstag und Bekanntmachung des Hinweises auf die Patenterteilung: **21.05.2025**
(21) Anmeldenummer: 21211528.1
(22) Anmeldetag: 30.11.2021
(51) Int. Cl.: H02J 7/00, B60L 53/30

(54) **ELEKTROLADESCHRANK ZUM LADEN VON AKKUMULATOREN**
ELECTRIC CHARGING CABINET FOR CHARGING BATTERIES
ARMOIRE DE CHARGE ÉLECTRIQUE PERMETTANT DE CHARGER DES ACCUMULATEURS

(30) Priorität: 01.12.2020 DE 102020131791
(43) Veröffentlichungstag der Anmeldung: 08.06.2022
(73) Patentinhaber: Lista GmbH, 51702 Bergneustadt (DE)
(72) Erfinder: Dyllong, Andreas, 51580 Reichshof (DE)
(74) Vertreter: Neumann Müller Oberwalleney Patentanwälte PartG mbB

(56) Entgegenhaltungen:
- CH-A2- 713 481

## Beschreibung

Die vorliegende Erfindung betrifft einen Elektroladeschrank zum Laden von Akkumulatoren, umfassend einen Schrankkorpus aus Metall und mehrere übereinanderliegende Schrankfächer, wobei zumindest eine Teilzahl der Schrankfächer jeweils einen elektrischen Stromanschluss und eine Fachtür mit einer Stellvorrichtung aufweist. Insbesondere betrifft die vorliegende Erfindung einen Elektroladeschrank zum Laden von Akkumulatoren von E-Bikes, Elektrofahrrädern, Pedelecs oder dergleichen, die in an sich bekannter Weise mit elektrischen Hilfsantrieben ausgestattet sind.

Aus der DE 20 2017 003 234 U1 ist eine Ladestation für E-Bikes bekannt. Zum Laden der Akkumulatoren der E-Bikes sind oberhalb von Fahrradhalterungen mehrere nebeneinander angeordnete Schließfächer ausgebildet, in denen Stromanschlüsse zum Anschließen von externen Ladegeräten vorgesehen sind. Die Schließfächer können mit selbstschließenden Türen ausgestattet sein.

Aus der WO 2018/153 912 A1 ist eine Anlage zum Errichten und Betreiben eines Netzes von Akku-Wechselstationen für elektrische Fahrzeuge mit wechselbaren Akkus bekannt. Eine einzelne Wechselstation umfasst ein Schließfach-Regal mit einer Anzahl Schließfächern für das Einsetzen verschiedener Akku-Typen in zugehörige Schlösser in den Schließfächern. Jedes Schließfach weist einen Stromanschluss mit Ladeeinheit für den betreffenden Akku-Typ sowie eine Messvorrichtung zum Messen des Ladezustandes eines eingesetzten Akkus auf. Die Schließfächer haben jeweils Türen, die über elektrisch betätigbare Schlösser öffenbar sind. In der CH 713 481 A2 ist ein Elektroladeschrank zum Laden von Akkumulatoren gezeigt, insbesondere von E-Bikes, umfassend: einen Schrankkorpus aus Metall und mehrere übereinander liegende Schrankfächer, wobei die Schrankfächer jeweils einen elektrischen Stromanschluss und eine Fachtür mit mindestens einer Stellvorrichtung aufweisen.

Eine Aufgabe der vorliegenden Erfindung besteht darin, die Betriebssicherheit sowie den Wetter- und Vandalenschutz des Elektroladeschranks zu erhöhen.

Zur Lösung wird ein Elektroladeschrank der eingangs genannten Art vorgeschlagen, wobei eine Stellvorrichtung ein gegenüber dem Schrankkorpus abgestütztes Federmittel und einen an der Fachtür abgestützten Hebel aufweist, wobei das Federmittel und der Hebel miteinander verbunden sind und die Fachtüre von dem Federmittel in Schließrichtung, respektive Schließstellung beaufschlagt wird, wobei das Federmittel in einem vom Schrankfach abgetrennten Aufnahmeraum ober- oder unterhalb eines Fachbodens angeordnet ist, wobei der Aufnahmeraum zu einer Öffnungsseite des Schrankkorpus von einer Abdeckung verschlossen ist, die einen Durchbruch für den Hebel aufweist.

Ein Vorteil besteht darin, dass die Federmittel der Stellvorrichtungen für Nutzer des Elektroladeschranks nicht einsehbar, respektive unerreichbar in den Aufnahmeräumen, die räumlich von den Schrankfächern abgetrennt sind, untergebracht sind. Die Hebel greifen durch die Durchbrüche hindurch und sind damit nur abschnittsweise im Zugriffsbereich der Nutzer. Dadurch wird die Verletzungsgefahr der Nutzer durch kraftbeaufschlagte und sich bewegende Teile der Stellvorrichtungen, wie die Federmittel, reduziert und die Betriebssicherheit des Elektroladeschranks erhöht. Des Weiteren wird der Vandalenschutz verbessert, da die Federmittel außerhalb des Zugriffsbereichs der Nutzer angeordnet sind. Lediglich die Hebel greifen durch die korrespondierenden Durchbrüche nach außen und verbinden die Federmittel mit den Fachtüren. Ein weiterer Vorteil ist, dass die selbstschließenden Türen ein ungewolltes Offenstehen bei Nichtgebrauch des jeweiligen Schrankfachs sicher verhindern. Hierzu sind die Fachtüren durch die Federmittel in Richtung deren Schließstellungen mit Kraft beaufschlagt. In der Schließstellung ist das jeweilige Schrankfach durch seine Fachtür geschlossen, wodurch der Regenschutz verbessert und elektronische Komponenten des Elektroladeschranks vor Wasser geschützt sind. Des Weiteren bieten die Fachtüren im geschlossenen Zustand weniger Angriffsfläche für Wind. In der Schließstellung ist die jeweilige Fachtür zwar geschlossen, kann aber durch Schwenken der Fachtür manuell geöffnet werden. Um die Fachtüren abzuschließen, können in an sich bekannter Weise Türschlösser vorgesehen sein. Durch die Ausgestaltung des Schrankkorpus aus Metall kann der Elektroladeschrank zudem brandhemmend ausgebildet sein. Im Ergebnis eignet sich der Elektroladeschrank besonders für den Außenbereich im halböffentlichen und öffentlichen Raum.

Mit der beschriebenen Bauart kann eine Ladeinfrastruktur für Akkumulatoren kompakt an einer Stelle angeboten werden. In den mit einem Stromanschluss ausgestatteten Schrankfächern, die auch als Ladefächer bezeichnet werden, können die Nutzer ein insbesondere selbst mitgebrachtes Ladegerät und/oder ihren Akkumulator zum Laden anschließen und verstauen. Die Stromanschlüsse können konventionelle Steckdosen, beispielsweise Schutzkontaktsteckdosen sein. Somit können grundsätzlich auch andere Akkumulatoren, wie zum Beispiel solche von Smartphones, aufgeladen werden. Der Elektroladeschrank kann je Ladefach mit einem separaten Fehlerstromschutzschalter (kurz: FI-Schalter) und/oder einem Leitungsschutzschalter (kurz: LS-Schalter) ausgestattet sein, um die Stromanschlüsse abzusichern. Die FI-Schalter und/oder LS-Schalter können über das jeweilige Ladefach zugänglich sein. Hierzu können die Schalter beispielsweise in Verteilerkästen, die, wie auch die Stromanschlüsse, an Innenwänden der Ladefächer sichtbar und somit über die Ladefächer zugänglich montiert sein können, angeordnet sein.

Es versteht sich, dass jedes Schrankfach, in dem ein elektrischer Stromanschluss installiert ist, über eine eigene Fachtür verfügen kann. Die Fachtüren sind zwischen der Schließstellung und der Offenstellung vorzugsweise um vertikal ausgerichtete Schwenkachsen schwenkbar am Schrankkorpus angelenkt. Die Schwenkachsen können vertikal ausgerichtet sein, wenn der Elektroladeschrank auf einer horizontal ausgerichteten Aufstellfläche aufgestellt ist. In der Schließstellung kann die jeweilige Fachtür den Durchbruch, durch den der Hebel hindurch greift, verdecken. Um die Fachtür selbstschließend auszugestalten, weist die Fachtür eine eigene Stellvorrichtung auf. Die Stellvorrichtung wiederum weist das Federmittel und den Hebel auf, der das Federmittel mit der Fachtür verbindet. Aufbau und Funktionsweise der selbstschließenden Fachtüren und insbesondere der Ladefächer des Elektroladeschranks sind vorzugsweise untereinander gleich. Dadurch kann der Elektroladeschrank in modularer Bauweise gefertigt werden. Insofern sind die vorliegenden Ausführungen für eine der Fachtüren/Ladefächer gleichermaßen für mehrere und/oder alle Fachtüren/Ladefächer des Elektroladeschranks gültig, es sei denn, es wird in der Beschreibung auf Unterschiede hingewiesen. Der Elektroladeschrank weist mehrere, das heißt zumindest zwei Ladefächer auf, die übereinanderliegend angeordnet sind. Somit kann der Elektroladeschrank säulenförmig sein, wodurch der Elektroladeschrank eine schlanke Bauform erhält. Ebenso können die Ladefächer auch matrixförmig, das heißt neben- und übereinander in dem Elektroladeschrank oder nur nebeneinander angeordnet sein.

Der jeweilige Hebel kann aus Metall, insbesondere einem Blech, vorzugsweise Stahlblech, hergestellt sein. Das Blech, respektive der Hebel kann eine Blechstärke, respektive Dicke zwischen 1 Millimeter und 5 Millimeter haben, insbesondere zwischen 1,5 Millimeter und 2,5 Millimeter. Insbesondere ist der jeweilige Hebel einteilig, respektive ein Bauteil aus einem Stück. Der jeweilige Hebel kann ein Stanz-Biegeteil sein. Dadurch sind die Hebel einfach herzustellen, leicht im Gewicht und ausreichend stabil.

Die Hebel können fest mit den Fachtüren verbunden sein, wobei ein jeweiliger Hebel als Koppelelement zwischen dem im Aufnahmeraum angeordneten Federmittel und der Fachtür dient. Entsprechend wird durch das Schwenken der jeweiligen Fachtür durch den Nutzer in Richtung der Offenstellung das mit dem Hebel verbundene Federmittel gegen seine Federkraftrichtung vorgespannt. Die Hebel können mit den Fachtüren vernietet und/oder verschweißt und/oder verklebt sein. Insbesondere können die Hebel jeweils an einem der Fachtür zugewandten Ende, welches außerhalb des Aufnahmeraums liegt, eine Verbindungsstruktur zum Befestigen des Hebels an der Fachtür aufweisen.

Die Verbindungsstruktur kann eine Abkantung sein, die laschenartig in einen Schlitz, der an der Fachtür ausgebildet sein kann, eingesetzt ist. Vorzugsweise sind die Fachtüren doppelwandig ausgebildet. Somit kann die jeweilige Fachtür eine vom Schrankfach abgewandte Außenwand und eine davon beabstandete Innenwand, die an der dem Schrankfach zugewandten Innenseite an der Außenwand befestigt ist, aufweisen. Die Innenwand kann den Schlitz aufweisen, durch den die Abkantung des Hebels laschenartig in den zwischen der Außenwand und der Innenwand gebildeten Zwischenraum eingesteckt und insbesondere von innen mit der Innenwand fest verbunden sein kann. Hierzu kann die Abkantung mit der Fachtür, insbesondere der Innenwand vernietet sein. Grundsätzlich möglich ist aber auch, dass der Hebel keine Abkantung aufweist und stattdessen auf Stoß mit der Fachtür verbunden ist. Verbindungstechniken wie Schweißen, Löten, Kleben, Schrauben sind ebenso möglich. In bevorzugter Weise stützen sich die an den Fachtüren befestigten Hebel nur an den Fachtüren ab, sodass die Hebel beim Auf- und Zuschwenken den Schwenkbewegungen der Fachtüren folgen. An den freien Enden der Hebel, die in den Aufnahmeräumen angeordnet sind, sind wiederum die Federmittel angebunden.

Die Hebel können jeweils einen Hebelabschnitt aufweisen, der beim Schwenken der Fachtüren von der Offenstellung in die Schließstellung, und vice versa, sich durch den jeweiligen Durchbruch bewegt. Der jeweilige Hebelabschnitt kann eine flache, ebene Grundform aufweisen. Dadurch ist das Verletzungsrisiko der Nutzer reduziert. Die Durchbrüche können entsprechend schlitzförmig gestaltet sein, wobei die Hebel vorzugsweise berührungsfrei durch die Durchbrüche hindurch greifen. Die flache, ebene Grundform des jeweiligen Hebels kann in einer senkrecht zur Schwenkachse der Fachtür angeordneten Ebene liegen. Vorzugsweise sind diese Ebenen horizontal ausgerichtete Ebenen und parallel zueinander angeordnet. Dadurch beanspruchen die Hebel in den Durchbrüchen sowie außerhalb des Aufnahmeraums einen, bezogen auf die Schwenkachsen, minimalen axialen Arbeitsraum.

Weiterhin kann der Hebelabschnitt des jeweiligen Hebels in einer Ebene der Grundform gebogen ausgestaltet sein. Dadurch wird der senkrecht zur Schwenkachse, respektive horizontal verlaufende Arbeitsweg des Hebels verringert. Die Ebene ist vorzugsweise senkrecht zu der Schwenkachse ausgerichtet. Der jeweilige Hebelabschnitt kann in Umfangsrichtung um die jeweilige Schwenkachse gebogen ausgestaltet sein. Dadurch kann die Erstreckung des jeweiligen Durchbruchs in der Ebene des Hebels, sprich die Breite des Durchbruchs reduziert werden. Vorzugsweise ist der Hebelabschnitt des jeweiligen Hebels als Kreisringabschnitt ausgebildet, wobei ein Mittelpunkt des Kreisringabschnitts zumindest etwa auf der Schwenkachse der jeweiligen Fachtür liegen kann. Mit anderen Worten kann die Fläche des jeweiligen Hebelabschnitts, insbesondere mit Blick in Richtung der Schwenkachse, einem Kreisringabschnitt entsprechen. Auf diese Weise kann der Hebelabschnitt des jeweiligen Hebels beim Schwenken um die jeweilige Schwenkachse drehen. Dadurch kann die Breite des jeweiligen Durchbruchs soweit reduziert werden, dass die Breite des jeweiligen Durchbruchs lediglich geringfügig größer als die Breite des Kreisringabschnitts ausgebildet sein muss, wenn ein schleiffreies Durchgreifen der Hebel durch die Durchbrüche gewünscht ist. Die Breite des Kreisringabschnitts entspricht in an sich bekannter Weise der Differenz von Radius des äußeren Kreisabschnitts und Radius des inneren Kreisabschnitts. "Geringfügig größer" soll bedeuten, dass die Breite des jeweiligen Durchbruchs zwischen 1,0 und 10 Millimeter größer sein kann als die Breite des Kreisringabschnitts des jeweiligen Hebelabschnitts. Der Hebel kann auch in der Höhe mit Spiel durch den Durchbruch greifen. Der Durchbruch kann eine Höhe aufweisen, die zwischen 1,0 und 10 Millimeter größer sein kann als die Dicke, respektive Blechstärke des jeweiligen Hebelabschnitts.

Vorzugsweise ist zur Begrenzung des Öffnungswinkels der jeweiligen Fachtür, den die Fachtür in der Offenstellung einnimmt, an dem jeweiligen Hebel eine Anschlagfläche ausgebildet, die in der Offenstellung an einer Gegenfläche des Schrankkorpus beziehungsweise einem hiermit verbundenen Teil anschlägt. Auf diese Weise erfüllen die Hebel eine Doppelfunktion, wodurch die Bauteilzahl des Elektroladeschranks reduziert wird. Die Anschlagflächen der Hebel können in den Aufnahmeräumen angeordnet sein. Die jeweilige Gegenfläche kann an der Abdeckung des jeweiligen Fachbodens, dort insbesondere an einer dem Aufnahmeraum zugewandten Innenseite der Abdeckung angeordnet sein. Die Gegenflächen können parallel zu den Schwenkachsen ausgerichtet sein. Die Gegenflächen können benachbart zu den Durchbrüchen an den Innenseiten der Abdeckungen der Fachböden angeordnet sein.

Weiterhin können die Anschlagflächen an Vorsprüngen der Hebel angeordnet sein. Der Vorsprung des jeweiligen Hebels kann in der Schwenkebene des Hebelabschnitts liegen, oder auch aus dieser senkrecht abgebogen sein. Die Anschlagfläche kann parallel zur Schwenkachse der jeweiligen Fachtür liegen. Dadurch sind die Hebel in axialer Richtung besonders kompakt bauend. Die Anschlagfläche des jeweiligen Hebels kann in axialer Erstreckung der Dicke des Hebelabschnitts entsprechen. Der Hebelabschnitt des jeweiligen Hebels kann eine Dicke zwischen 1 und 5 Millimeter haben.

Der maximalen Öffnungswinkel der jeweiligen Fachtür, den diese in der Offenstellung einnimmt, kann mindestens 80 Grad und maximal 130 Grad betragen. Gute Ergebnisse wurden mit einem maximalen Öffnungswinkel von 90 Grad bis 110 Grad, beispielsweise in etwa 100 Grad erreicht. Um Hebel mit einer einfach herzustellenden Geometrie bereitzustellen, kann sich der Vorsprung, respektive die Anschlagfläche unmittelbar an den Hebelabschnitt des jeweiligen Hebels anschließen. Der Hebelabschnitt des jeweiligen Hebels kann sich über einen Kreisringabschnitt erstrecken, der einen Mittelpunktswinkel aufweist, der zwischen 80 Grad und 130 Grad, bevorzugt zwischen 90 Grad und 110 Grad, beispielsweise etwa 100 Grad beträgt. Der Mittelpunktswinkel des jeweiligen Hebelabschnitts kann auf der Schwenkachse der jeweiligen Fachtür liegen. Die Anschlagfläche des jeweiligen Hebels kann in einer Ebene und die jeweilige Fachtür in einer weiteren Ebene liegen, wobei die beiden Ebenen in einem Winkel zueinander stehen, der betragsmäßig dem Öffnungswinkel entspricht.

Des Weiteren kann vorgesehen sein, dass die Federmittel jeweils an einem ersten Anlenkpunkt drehbar mit einer ortsfest zum Schrankkorpus angeordneten Stützfläche und an einem zweiten Anlenkpunkt drehbar mit dem jeweiligen Hebel verbunden sind. Die Anlenkpunkte können somit Gelenkpunkte sein, um die das Federmittel schwenken kann. Dadurch können die Federmittel besonders kompakt bauend in den Aufnahmeräumen untergebracht sein. Vorzugsweise sind die Anlenkpunkte der Federmittel in den Aufnahmeräumen angeordnet. Die Stützflächen für die ersten Anlenkpunkte können beispielsweise an den Innenseiten der Abdeckungen der Fachböden, in denen die Durchbrüche für die Hebel ausgebildet sind, angeordnet sein. oder an Innenseiten der Seitenwände des Schrankkorpus angeordnet sein. Die zweiten Anlenkpunkte können unmittelbar an den Hebeln angeordnet sein. Die beiden Anlenkpunkte des jeweiligen Federmittels können in einer gemeinsamen Ebene liegen, die orthogonal zur Schwenkachse ausgerichtet sein kann. Jeder der Anlenkpunkte liegt auf einer Drehachse, um die das Federmittel schwenken kann. Die Drehachsen verlaufen vorzugsweise parallel zueinander und/oder parallel zu den Schwenkachsen.

Bezogen auf das jeweilige Federmittel kann somit der erste Anlenkpunkt ortsfest zum Schrankkorpus gehalten sein, wogegen der zweite Anlenkpunkt beim Schwenken der jeweiligen Fachtür am Hebel mitbewegt werden kann. Um besonders kompakt bauende Hebel bereitzustellen, können die Vorsprünge mit den Anschlagflächen jeweils an einer Hebelseite vorstehen, die dem jeweiligen ersten Anlenkpunkt zugewandt ist.

Das jeweilige Federmittel kann eine Gasfeder sein. Die Gasfeder benötigt einen geringen Platzbedarf, weshalb diese gut in den Aufnahmeräumen unterbeziehungsweise oberhalb der Fachböden unterzubringen sind. In einer jeweiligen Gasfeder kann ein Dämpfungsmechanismus, zum Beispiel ein Öldämpfer, integriert sein. Bei, mit Blick auf die Öffnungsseite des Schrankkorpus, vorzugsweise rechts angelenkten Fachtüren sind die Federmittel insbesondere Gasdruckfedern. Dadurch können die Stellvorrichtungen, bezogen auf die Tiefe des Schrankkorpus, besonders kompakt bauend angeordnet werden. Das jeweilige Federmittel kann derart im jeweiligen Aufnahmeraum angeordnet, dass die Federkraftrichtung parallel zu den Fachböden verläuft. Die Fachböden definieren Bodenebenen, die senkrecht zu den Schwenkachsen beziehungsweise horizontal ausgerichtet sein können, wenn der Elektroladeschrank auf einer horizontalen Aufstellfläche aufgestellt ist. Die Fachböden können an den dem jeweiligen Schrankfach zugewandten Oberseiten die Ablageflächen der Schrankfächer bilden, auf denen zum Beispiel die Ladegeräte und die zu ladenden Akkumulatoren abgelegt werden können. Insbesondere liegt die Federkraftrichtung des jeweiligen Federmittels auf der gedachten Gerade zwischen den beiden zugehörigen Anlenkpunkten, insbesondere den durch die Anlenkpunkte verlaufenden Drehachsen. Grundsätzlich können auch andere Federmittel, beispielsweise Gaszugfedern, Schraubenfedern oder ähnliche eingesetzt werden.

Eine Stellvorrichtung kann jeweils folgende Komponenten umfassen: das Federmittel, das am ersten Anlenkpunkt mit der ortsfesten Stützfläche am Schrankkorpus und am zweiten Anlenkpunkt mit dem jeweiligen Hebel drehbar verbunden ist, und den einteilig gestalteten Hebel, der das Federmittel mit der jeweiligen Fachtür verbindet, sowie notwendige Befestigungsmittel, wie Schraub-, Niet- und Klebemittel, um die beiden Anlenkpunkte anzubinden und den Hebel an der Fachtür zu befestigen. Der Hebel kann die Anschlagfläche für die Öffnungswinkelbegrenzung aufweisen. Weiterhin kann an dem Hebel die Verbindungsstruktur zum Verbinden des Hebels mit der jeweiligen Fachtür ausgebildet sein.

Für einen guten Bedienkomfort, kann das Federmittel der jeweiligen Stellvorrichtung unterhalb des unteren Fachbodens oder oberhalb des oberen Fachbodens beziehungsweise Verkleidungselements des jeweiligen Schrankfachs angeordnet sein. Eine Anordnung unterhalb des unteren Fachbodens eignet sich vor allem für die unteren Schrankfächer, welche entsprechend einfacher bedient werden können. Bei oberen Schrankfächern, die von den Nutzer tendenziell eher von schräg unten bedient werden, beziehungsweise dem obersten Schrankfach, eignet sich die Anordnung der jeweiligen Stellvorrichtung in einem abgetrennten Aufnahmeraum, der oberhalb des oberen Fachbodens beziehungsweise Verkleidungselements angeordnet ist. Ein Fachboden schließt im Rahmen der vorliegenden Offenbarung begrifflich insbesondere einen Boden mit ein, welcher das von der jeweiligen Fachtür verschließbare Fach zumindest teilweise räumlich begrenzt. Es kann sich dabei um einen oberen Boden oder einen unteren Boden des Faches handeln. In Draufsicht auf den Boden kann dieser die gesamte Querschnittsfläche des Faches ganz oder teilweise ausfüllen. Vorzugsweise hat jede Fachtüre genau eine Stellvorrichtung, wobei prinzipiell auch die Verwendung von zwei Stellvorrichtungen je Tür - einer oben und einer unten - möglich ist.

Zur Abtrennung der Aufnahmeräume von den Schrankfächern kann zumindest bei denjenigen Schrankfächern, bei denen sich darunter und/oder darüber zumindest ein weiteres Schrankfach anschließt, ein Verkleidungselement angeordnet sein, sodass der Aufnahmeraum zwischen dem Verkleidungselement und dem Fachboden begrenzt ist. Das jeweilige Verkleidungselement kann sich über die Breite des jeweiligen Schrankfachs erstrecken. Insbesondere kann für sämtliche der Aufnahmeräume gelten, dass diese jeweils zwischen einem der Fachböden und einer der Verkleidungen ausgebildet sind. Die Abdeckungen, die die Aufnahmeräume zur Öffnungsseite des Schrankkorpus hin verschließen, können umgekantete Abschnitte des jeweiligen Fachbodens oder des Verkleidungselements sein oder können gegenüber den Fachböden beziehungsweise den Verkleidungselementen eigenständige Blechteile sein, die öffnungsseitig vor die Aufnahmeräume gesetzt und mit dem Schrankkorpus und/oder dem jeweiligen Fachboden und/oder dem jeweiligen Verkleidungselement verbunden sind. Bei dem untersten Schrankfach kann das Federmittel grundsätzlich auch in einem Sockel des Schrankkorpus aufgenommen sein, der unterhalb des Fachbodens für das unterste Schrankfach angeordnet ist, sodass hier auf ein weiteres Verkleidungselement verzichtet werden könnte. Der unterste Fachboden kann eine Revisionsöffnung verschließen, über das bei Installation und Wartung Zugriff zu einem unteren Abteil im Sockel möglich sein kann. In dem Sockel kann zum Beispiel eine Verteilerbox angeordnet sein, über die die einzelnen elektrischen Stromanschlüsse der einzelnen Schrankfächer an eine zentrale Stromversorgung angebunden sein können. Bei dem obersten Schrankfach kann das Federmittel zum Beispiel unter einem Dach des Schrankkorpus angeordnet sein, sodass der abgetrennte Aufnahmeraum oberhalb des oberen Fachbodens des obersten Schrankfachs angeordnet sein kann. Auch hier kann auf ein weiteres Verkleidungselement verzichtet werden.

Das jeweilige Verkleidungselement kann beispielsweise ein Trennboden sein, der beabstandet zum Fachboden angeordnet ist, sodass zwischen dem Fachboden und dem Trennboden der Aufnahmeraum begrenzt sein kann. Die Trennböden können, wie die Fachböden, horizontale Böden sein, die sich am Schrankkorpus abstützen können. Die Trennböden können sich zumindest im Wesentlichen über die gesamte Innenfläche des jeweiligen Schrankfachs erstrecken. Zumindest im Wesentlichen soll hier eine Abweichung von +/- 20 Prozent einbeziehen.

Weiterhin kann das jeweilige Verkleidungselement auch eine Abkastung sein, die am jeweiligen Fachboden befestigt ist und den Aufnahmeraum begrenzt. Von Vorteil ist, dass die Abkastungen, ausgehend von der Öffnungsseite des Schrankkorpus, in der Tiefe der Schrankfächer nur so groß dimensioniert sein müssen, um für die Stellvorrichtungen ausreichend Arbeitsraum bereitzustellen. Vorzugsweise erstreckt sich die jeweilige Abkastung über weniger als 50 Prozent, insbesondere weniger als 40 Prozent, beispielsweise zwischen 30 bis 35 Prozent, der Tiefe des jeweiligen Schrankfachs. Eine Abkastung kann jeweils eine Erstreckung, entlang der Tiefe des Schrankkorpus, von 100 bis 300 Millimeter haben, insbesondere zwischen 120 und 200 Millimeter. Es hat sich gezeigt, dass Abkastungen mit einer Tiefe von etwa 150 Millimeter einen ausreichend großen Arbeitsraum für eine Stellvorrichtung bereitstellen. So steht dem jeweiligen Schrankfach im hinteren Bereich, bezogen auf die Tiefe hinter der Abkastung, eine größere Schrankfachhöhe zur Verfügung. Die jeweilige Abkastung kann sich am jeweiligen Fachboden abstützen und kann mit diesem fest verbunden, insbesondere vernietet sein.

Ein Aufnahmeraum kann jeweils eine Höhe von beispielsweise 20 bis 60 Millimeter aufweisen, insbesondere etwa 25 bis 40 Millimeter. Die Tiefe des jeweiligen Aufnahmeraums kann von 50 bis 300 Millimeter betragen, vorzugsweise etwa 100 bis 180 Millimeter.

Gemäß einer Ausgestaltung weisen die Schrankfächer, respektive Ladefächer gleiche Abmessungen auf, wobei das jeweilige Schrankfach eine Breite zwischen 350 und 700 Millimeter, bevorzugt von etwa 450 bis 550 Millimeter, eine Tiefe zwischen 300 und 700 Millimeter, bevorzugt von etwa 400 bis 500 Millimeter, und eine Höhe zwischen 250 und 600 Millimeter, bevorzugt von etwa 400 bis 450 Millimeter aufweist. Bei der Dimensionierung der Schrankfächer ist bevorzugt darauf zu achten, dass ausreichend Platz für ein Ladegerät und Akkumulator gegeben ist, und ferner möglichst viele Schrankfächer übereinander angeordnet sind, wobei auch die oberen Schrankfächer von der Aufstellfläche aus gut für den Nutzer zu erreichen sein sollen. Der Elektroladeschrank kann bei einer exemplarischen Anordnung von vier übereinander liegenden Schrankfächern eine Gesamthöhe von beispielsweise 1900 Millimeter bis 2200 Millimeter aufweisen.

Zur Versorgung der einzelnen Schrankfächer mit elektrischem Strom kann der Elektroladeschrank einen zentralen Verteilerschacht aufweisen, der seitlich außerhalb der Schrankfächer ausgebildet ist und sich entlang einer Hochachse des Elektroladeschranks erstreckt. In dem Verteilerschacht können Elektrokabel untergebracht und die Anschlüsse der einzelnen Stromanschlüsse für die Ladefächer vorgesehen sein. Mit Blick auf die Öffnungsseite des Schrankkorpus kann der Stromanschluss in jedem Ladefach beispielsweise an einer linken oder rechten Seitenwand des Ladefachs angeordnet sein. Dies ist besonders dann von Vorteil, wenn der Elektroladeschrank nur übereinander liegende Schrankfächer aufweist. Wenn der Elektroladeschrank matrixförmig angeordnete Schrankfächer aufweist, kann der zentrale Verteilerschacht auch zwischen zwei vertikal verlaufenden Schrankfachreihen aus jeweils mehreren übereinander liegenden Schrankfächern angeordnet sein. Grundsätzlich denkbar ist auch, dass der Elektroladeschrank dann auch mehrere, insbesondere zwei außenliegende Verteilerschächte aufweisen kann. Beispielsweise kann der Elektroladeschrank einen Sockel aufweisen, der breit genug ist, damit zwei vertikal verlaufende Schrankfachreihen aus jeweils mehreren Schrankfächern nebeneinander auf dem Sockel angeordnet sein können. Dann können zum Beispiel an beiden Seiten des Elektroladeschranks, das heißt mit Blick auf die Öffnungsseite links und rechts, je ein Verteilerschacht für die Elektrokabel angeordnet sein. Auf diese Weise können die beiden vertikal verlaufenden Schrankfachreihen getrennt voneinander verkabelt werden, wobei die beiden Seiten grundsätzlich an eine zentrale Stromversorgung des Elektroladeschranks angeschlossen sein können.

Um die beim Laden der Akkumulatoren entstehende Wärme aus den Schrankfächern abzuführen, können Lüftungsschlitze in den Seitenwänden der Schrankfächer ausgebildet sein. Die Lüftungsschlitze können seitlich in zumindest einen Lüftungskanal münden, um die Schrankfächer passiv zu kühlen.

Vorzugsweise sind die Lüftungsschlitze und die elektrischen Stromanschlüsse im jeweiligen Schrankfach an einer gemeinsamen Seitenwand angeordnet. Auf diese Weise können der Verteilerschacht und der Lüftungskanal nebeneinander angeordnet sein. Dadurch kann ein in der Breite und Tiefe besonders kompakt bauender Elektroladeschrank bereitgestellt werden.

Bevorzugte Ausführungsbeispiele der Erfindung werden nachstehend anhand der Zeichnungen erläutert. Hierin zeigen:
- Figur 1: einen Elektroladeschrank gemäß einer Ausführungsform der vorliegenden Erfindung in perspektivischer Seitenansicht von schräg oben, wobei Fachtüren in Offenstellungen gezeigt sind;
- Figur 2: der Elektroladeschrank in Schnittansicht entlang der Linie II-II aus Figur 1, wobei die Fachtür in der Offenstellung gezeigt ist;
- Figur 3: der Elektroladeschrank in Schnittansicht entlang der Linie II-II aus Figur 1, wobei die Fachtür in einer Zwischenstellung gezeigt ist;
- Figur 4: der Elektroladeschrank in Schnittansicht entlang der Linie II-II aus Figur 1, wobei die Fachtür in einer Schließstellung gezeigt ist;
- Figur 5: ein vergrößerter Teilausschnitt des Elektroladeschranks in perspektivischer Seitenansicht von schräg unten;
- Figur 6: der vergrößerte Teilausschnitt des Elektroladeschranks aus Figur 5, wobei lediglich zur Verdeutlichung des Aufbaus einer Stellvorrichtung Bauteile, wie ein Fachboden, ein Trennboden und eine Abdeckung nicht dargestellt sind;
- Figur 7: ein Hebel der Stellvorrichtung in perspektivischer Seitenansicht von schräg unten;
- Figur 8: in Explosionsansicht einen vergrößerten Teilausschnitt um den Hebel;
- Figur 9: der Elektroladeschrank aus Figur 1, wobei die Fachtüren in der Schließstellung gezeigt sind und zur Verdeutlichung des Aufbaus ein Schrägdachaufsatz entfernt wurde und;
- Figur 10: der Elektroladeschrank aus Figur 10, wobei zur Verdeutlichung des Aufbaus weiterhin eine linke Seitenabdeckung entfernt wurde;
- Figur 11: der Elektroladeschrank aus Figur 11, wobei zur Verdeutlichung des Aufbaus weiterhin eine Verteiler-Klemmtasche entfernt wurde;
- Figur 12: der Elektroladeschrank aus Figur 11 mit den Fachtüren in den Offenstellungen;
- Figur 13: einen Elektroladeschrank gemäß einer weiteren Ausführungsform der vorliegenden Erfindung in Längsschnittansicht, wobei die Fachtüren in den Schließstellungen gezeigt sind; und
- Figur 14: der Elektroladeschrank aus Figur 13 in Schnittansicht, analog zu der Linie II-II aus Figur 1, mit der Fachtür in der Zwischenstellung.

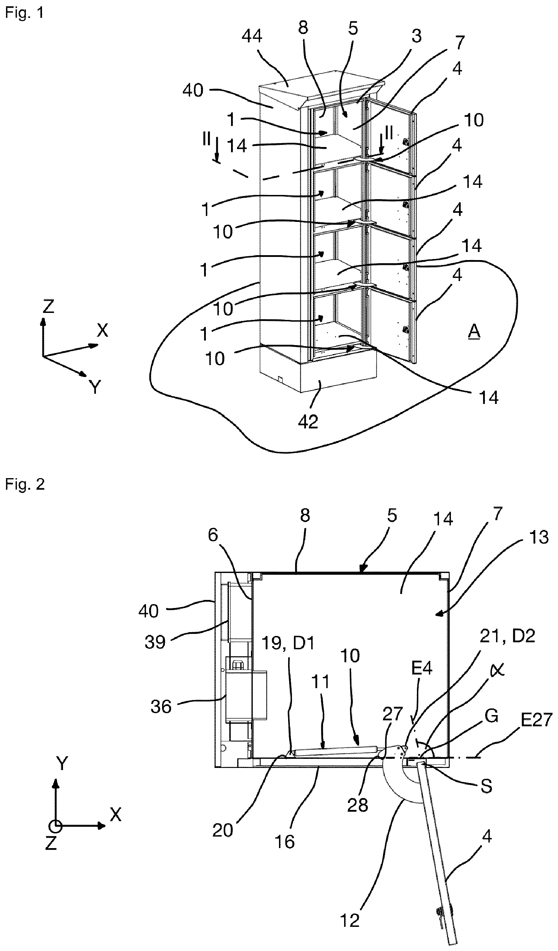

In der Figur 1 ist ein Elektroladeschrank gemäß einer Ausführungsform gezeigt, der zum Laden von Akkumulatoren, insbesondere von E-Bikes dient. In den Figuren 2 bis 12 sind weitere Details und Ansichten des Elektroladeschranks dargestellt. Der Elektroladeschrank weist, hier beispielhaft vier, übereinander liegende Schrankfächer 1 auf, die jeweils über einen eigenen elektrischen Stromanschluss 2 verfügen. Über eine Öffnungsseite 3 sind die Schrankfächer 1 für Nutzer, die den Elektroladeschrank zum Laden ihrer Akkumulatoren nutzen möchten, zugänglich. Jedes Schrankfach 1 weist eine Fachtür 4 auf, sodass jedes Schrankfach 1 für sich geöffnet und geschlossen werden kann.

Zur Verdeutlichung der Ausrichtung des Elektroladeschranks im Raum sind im Sinne eines dem Elektroladeschrank zugeordneten kartesischen Koordinatensystems Raumachsen X, Y, Z definiert und durch entsprechende Pfeile angegeben. Der Elektroladeschrank erstreckt sich mit seiner Breite entlang einer Raumachse X, seiner Tiefe entlang einer Raumachse Y und seiner Höhe entlang einer Raumachse Z. Im aufgebauten Zustand, der in der Figur 1 gezeigt ist, ist der Elektroladeschrank in der Regel auf einer horizontal ausgerichteten Aufstellfläche A aufgestellt (aufgestellter Zustand). Dann erstreckt sich die Raumachse Z zumindest im Wesentlichen entlang der Lotrichtung, respektive Vertikalen und die Raumachsen X, Y verlaufen in beziehungsweise parallel zur Aufstellfläche A. Soweit Begriffe wie horizontal, vertikal, oben, unten, oberhalb beziehungsweise unterhalb verwendet werden, beziehen sich diese auf den aufgestellten Zustand des Elektroladeschranks.

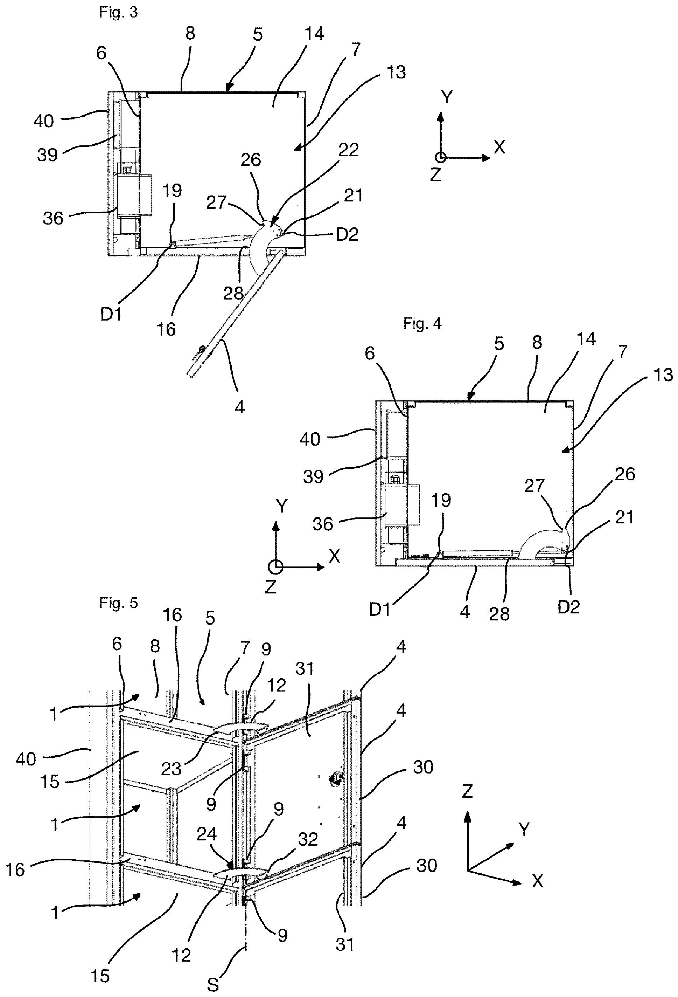

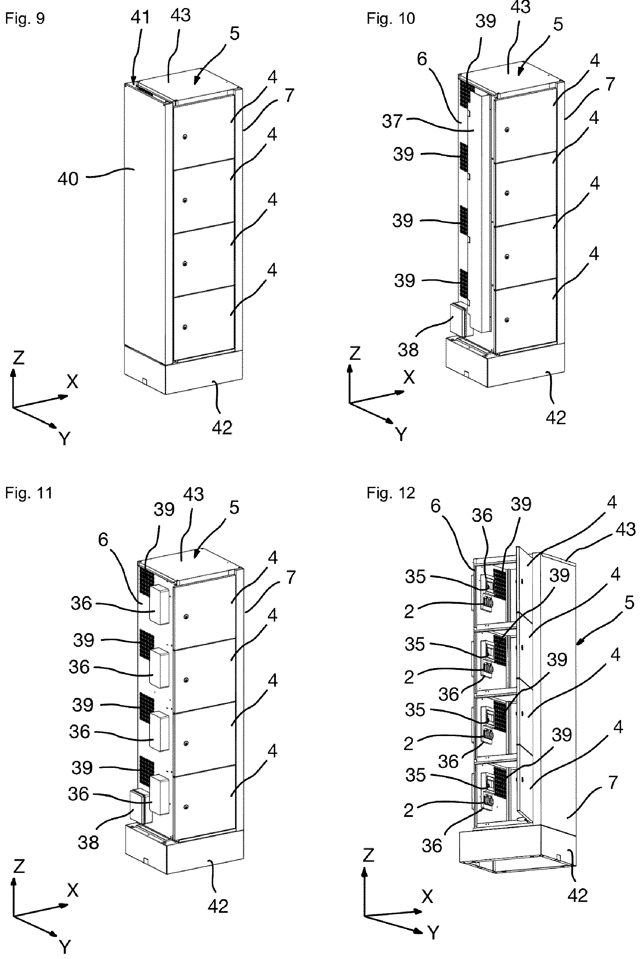

Der Elektroladeschrank umfasst einen Schrankkorpus 5 aus Metall, insbesondere Stahlblech, in dem die Schrankfächer 1 ausgebildet sind. Der Schrankkorpus 5 weist zwei einander gegenüberliegende Seitenwände 6, 7 auf, die über eine Rückwand 8 miteinander verbunden sind. Vorderseitig, an der Öffnungsseite 3 des Schrankkorpus 5 ist dieser offen ausgebildet. Die Fachtüren 4 sind, mit Blick auf die Figur 1, hier beispielhaft auf der rechten Seite der Schrankfächer 1, am Schrankkorpus 5 mittels Scharniere 9 gelagert. Somit kann die jeweilige Fachtür 4 um eine Schwenkachse S, die parallel zur Raumachse Z verläuft, in eine Offenstellung und eine Schließstellung geschwenkt werden. Die Schwenkachsen S liegen, hier, auf einer gemeinsamen Geraden. In den Figuren 1 und 12 sind sämtliche Fachtüren 4 offen (Offenstellung) dargestellt. Die Offenstellung ist auch in weiteren Figuren gezeigt, wie zum Beispiel in der Figur 2. In den Figuren 9 bis 11 sind sämtliche Fachtüren 4 in geschlossen (Schließstellung) dargestellt. Die Schließstellung ist auch in der Figur 4 gezeigt.

Jede Fachtür 4 ist mit einer eigenen Stellvorrichtung 10 verbunden, die die jeweilige Fachtür 4 in Schließrichtung beaufschlagt. Die Fachtüren 4 und die Stellvorrichtungen 10 sind bei den Schrankfächern 1 baugleich ausgebildet, weshalb die nachstehenden Erläuterungen für alle Schrankfächer 1 und Fachtüren 4 gleichermaßen gelten, soweit nicht an anderer Stelle auf Unterschiede explizit hingewiesen wird.

In den Figuren 2 bis 4 sind verschiedene Stellungen der Fachtür 4 und der Stellvorrichtung 10 gezeigt, nämlich in der Offenstellung (Figur 2), einer Zwischenstellung (Figur 3) und der Schließstellung (Figur 4).

Die Stellvorrichtung 10 weist ein Federmittel 11 und einen Hebel 12 auf. Der Hebel 12 stützt sich an der Fachtür 4 ab und ist mit dieser fest verbunden. Das Federmittel 11 stützt sich gegenüber dem Schrankkorpus 5 ab. Der Hebel 12 ist einteilig ausgestaltet und dient als Koppelelement zwischen dem Federmittel 11 und der Fachtür 4. Beim Schwenken der Fachtür 4 um die Schwenkachse S wird das Federmittel 11 gegen seine Federkraftrichtung vorgespannt, sodass das Federmittel 11 die Fachtür 4 in die Schließstellung mit Kraft beaufschlagt.

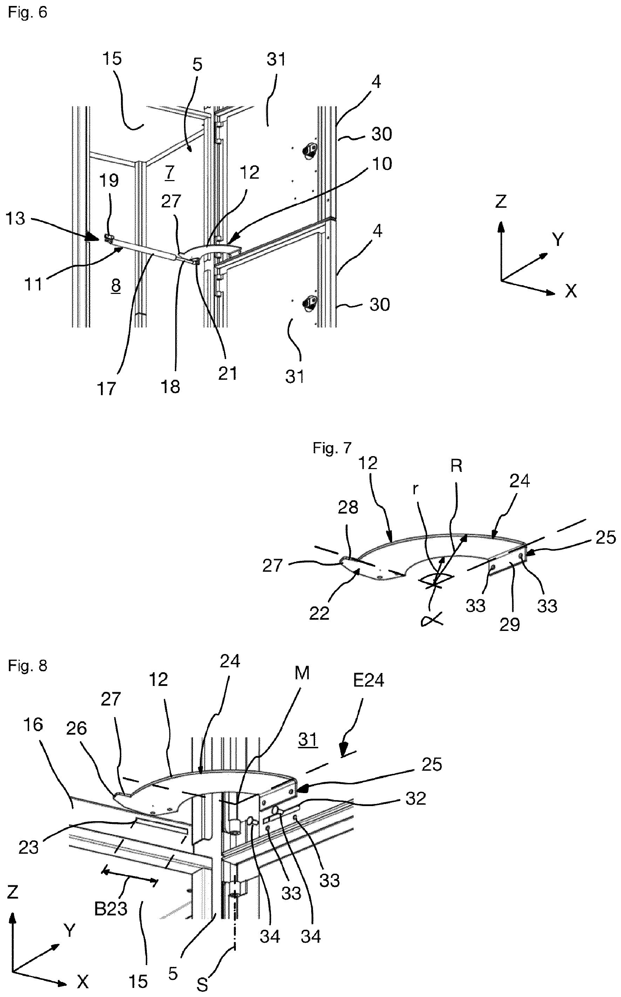

Das Federmittel 11 ist in einem für den Nutzer nicht einsehbaren und zudem unerreichbaren Aufnahmeraum 13, der vom Schrankfach 1 räumlich abgetrennt ist, untergebracht. Der Aufnahmeraum 13 ist, hier exemplarisch, unterhalb eines Fachbodens 14 des durch die Fachtür 4 zu schließenden Schrankfachs 1 angeordnet. Somit ist der Aufnahmeraum 13 nach oben hin durch den Fachboden 14 vom Schrankfach 1 abgetrennt. Nach unten hin ist der Aufnahmeraum 13 durch eine Verkleidung in Form eines Trennbodens 15 von dem darunter liegenden Schrankfach 1 abgetrennt. Wenn sich unterhalb des Aufnahmeraums 13 kein weiteres Schrankfach 1 anschließt, kann auf den Trennboden 15 auch verzichtet werden. In den Figuren 2 bis 4 ist lediglich zur Verdeutlichung der Anordnung und Funktionsweise der Stellvorrichtung 10 der Fachboden 14 und der Trennboden 15 des gezeigten Schrankfachs 1 ausgeblendet, wie auch in der Figur 6. Rückseitig ist der Aufnahmeraum 13 durch die Rückwand 8 verschlossen. Zur Öffnungsseite 3 des Schrankkorpus 5 ist der Aufnahmeraum 13 von einer Abdeckung 16 verschlossen, die am Schrankkorpus 5 befestigt ist. Der Fachboden 14 und der Trennboden 15 sind jeweils horizontal ausgerichtet und stützen sich an dem Schrankkorpus 5 ab. Zwischen dem Fachboden 14 und dem Trennboden 15 kann der Aufnahmeraum 13 eine Höhe von etwa 20 Millimeter bis 60 Millimeter aufweisen.

Das Federmittel 11 ist, hier, eine Gasdruckfeder, die in an sich bekannter Weise mit einem Öldämpfer zum Dämpfen der Schließbewegung der angeschlossenen Fachtür 4 ausgestattet sein kann. Das Federmittel 11 weist einen Zylinder 17 und eine Kolbenstange 18 auf. Beim Überführen der angeschlossenen Fachtür 4 in die Offenstellung (Figur 2) wird das Federmittel 11 auf Druck belastet, sodass die Kolbenstange 18 in den Zylinder 17 einfährt. Um dabei das Federmittel 11 stets axial, bezogen auf die Zylinderachse, zu belasten, ist das Federmittel 11 beidseitig gelenkig angebunden. Hierzu ist das Federmittel 11 an einem ersten Anlenkpunkt 19 mit einer ortsfest zum Schrankkorpus 5 angeordneten Stützfläche 20 drehbar verbunden. Die Stützfläche 20 ist, hier, an einer dem Aufnahmeraum 13 zugewandten Innenseite der Abdeckung 16 ausgebildet. Der erste Anlenkpunkt 19 liegt auf einer ersten Drehachse D1, um die das Federmittel 11 schwenken kann. Grundsätzlich könnte der erste Anlenkpunkt 19 auch mit der Innenseite der, hier linken, Seitenwand 6 drehbar verbunden sein. An einem zweiten Anlenkpunkt 21 ist das Federmittel 11 mit einem im Aufnahmeraum 13 liegenden freien Endabschnitt 22 des Hebels 12 drehbar verbunden. Der zweite Anlenkpunkt 21 liegt auf einer zweiten Drehachse D2, um die das Federmittel 11 schwenken kann. Die beiden Anlenkpunkte 19, 21 liegen in einer horizontal ausgerichteten Ebene. Die beiden Drehachsen D1, D2 verlaufen parallel zu der Schwenkachse S. Wenn der Nutzer die Fachtür 4 aus der Schließstellung in Richtung der Offenstellung schwenkt, übt somit das Federmittel 11, hier, Druckkräfte aus, um die Kolbenstange 18 wieder aus dem Zylinder 17 herauszudrücken und beaufschlagt damit die angeschlossene Fachtür 4 in die Schließstellung. In Figur 6 sind zur besseren Veranschaulichung Trennboden 15, Fachboden 14 und Abdeckung 16 entfernt. Das Federmittel 11 könnte zum Beispiel auch eine Gaszugfeder sein, wobei der erste Anlenkpunkt 19 dann an der rechten Seitenwand 7 angeordnet sein könnte.

Der Hebel 12 greift durch einen in der Abdeckung 16 ausgebildeten Durchbruch 23 hindurch. In der Figur 7 ist zur Verdeutlichung seiner Geometrie nur der Hebel 12 dargestellt. Der Hebel 12 ist ein einteiliges Stanz-Biegeteil aus einem Metall, insbesondere Stahlblech. Der Hebel 12 weist einen Hebelabschnitt 24 auf, der zwischen dem freien Endabschnitt 22, der mit dem Federmittel 11 verbunden ist, und einem türseitig gehaltenen Endabschnitt 25 ausgebildet ist. In den Figuren 2 bis 4 ist erkennbar, dass beim Schwenken der Fachtür 4 der freie Endabschnitt 22 stets im Aufnahmeraum 13 angeordnet ist, wogegen der türseitige Endabschnitt 25 stets außerhalb des Aufnahmeraums 13 angeordnet ist. Mit dem Hebelabschnitt 24 greift der Hebel 12 durch den Durchbruch 23 hindurch.

Der Hebelabschnitt 24 weist eine flache, ebene Grundform auf, die eine Ebene E24 definiert, die horizontal ausgerichtet ist und entsprechend senkrecht zur Schwenkachse S verläuft. Der Hebel 12 ist im Hebelabschnitt 24 in der Ebene E24 gebogen ausgestaltet. Mit Blick in Richtung der Schwenkachse S auf den Hebel 12 entspricht die Fläche des Hebelabschnitts 24 einem Kreisringabschnitt, dessen Mittelpunkt M auf der Schwenkachse S der Fachtür 4 liegt. Ein Mittelpunktswinkel α des Hebelabschnitts 24 kann, hier exemplarisch, 100 Grad betragen. Der Durchbruch 23 ist schlitzartig ausgebildet. Die Breite B23 des Durchbruchs 23 in der Abdeckung 16 ist geringfügig größer als die Breite B24 des kreisringabschnittsförmigen Hebelabschnitts 24. Die Breite B24 des Hebelabschnitts 24 entspricht der Differenz von Radius R des äußeren Kreisabschnitts und Radius r des kleineren, inneren Kreisabschnitts. Beim Überführen der Fachtür 4 von der Offenstellung in die Schließstellung, und vice versa, dreht somit der Hebel 12, respektive Hebelabschnitt 24 um den Mittelpunkt M auf der Schwenkachse S, sodass der Hebel 12, ohne die Abdeckung 16 zu berühren, durch den Durchbruch 23 greifen kann.

Zur Begrenzung eines Öffnungswinkels, den die Fachtür 4 in der Offenstellung einnimmt, weist der Hebel 12 einen Vorsprung 26 auf, der zusammen mit dem freien Endabschnitt 22 in der vom Hebelabschnitt 24 definierten Ebene E24 liegt. Der Vorsprung 26 steht in der Ebene E24 an einer dem ersten Anlenkpunkt 19 zugewandten Seite des freien Endabschnitts 22 zahnartig, respektive hakenförmig vor. Der Vorsprung 26 weist eine Anschlagfläche 27 auf, die in der Offenstellung n an einer Gegenfläche 28 anschlägt, die an der Innenseite der Abdeckung 16 ausgebildet ist. Die Gegenfläche 28 grenzt an den Durchbruch 23 und liegt zwischen dem Durchbruch 23 und dem ersten Anlenkpunkt 19. Die Anschlagfläche 27 definiert eine Ebene E27, die parallel zur Schwenkachse S verläuft. In der Figur 2 ist die Offenstellung gezeigt. Zusammen mit einer von der Fachtür 4 aufgespannten Ebene E4, in der die Schwenkachse S liegt, schließt die Ebene E27 der Anschlagfläche 27 einen Winkel von, hier, etwa 100 Grad ein. Eine parallel zur Schwenkachse S verlaufende und von dieser beabstandete Schnittgerade G der beiden Ebenen E4, E27 liegt außerhalb der Fachtür 4 und innerhalb des Schrankkorpus 5. Der Vorsprung 26 grenzt unmittelbar an den Hebelabschnitt 24, sodass der Öffnungswinkel durch die Größe des Mittelpunktwinkels α, um den der Hebelabschnitt 24 kreisringabschnittsförmig gebogen ist, bestimmt ist. Die Anschlagfläche 27 liegt in Bezug auf eine gedachte Gerade, die durch die beiden Anlenkpunkte 19, 21 verläuft, stets zwischen den beiden Anlenkpunkten 19, 21, respektive den beiden Drehachsen D1, D2, wie in den Figuren 2 bis 4 erkennbar ist.

Der türseitig gehaltene Endabschnitt 25 des Hebels 12 weist eine Verbindungsstruktur 29 in Form einer Abkantung auf. Die Verbindungsstruktur 29 des Hebels 12 verläuft senkrecht zur Ebene E24. Die Fachtür 4 ist doppelwandig ausgebildet und weist eine die Fachtür 4 nach außen hin abschließende Außenwand 30 und eine dem Schließfach 1 zugewandte Innenwand 31 auf. Die beiden Wände 30, 31 sind voneinander beabstandet und miteinander verbunden. Die Innenwand 31 weist einen Schlitz 32 auf, in den die Verbindungsstruktur 29 laschenartig eingesteckt ist. In der Figur 8 ist ein vergrößerter Teilausschnitt des Hebels 12 in einer Explosionsdarstellung gezeigt. Erkennbar ist, dass die Verbindungsstruktur 29 zwei Bohrungen 33 aufweist, durch die Niete 34 zum Verbinden des Hebels 12 mit der Innenwand 31 eingesetzt sind.

Die selbstschließenden Fachtüren 4 der Schrankfächer 1 sind vorliegend baugleich ausgebildet, sodass die vorstehenden Erläuterungen für alle Schrankfächer 1 und Fachtüren 4 gleichermaßen gelten. Die Fachtüren können auch unterschiedlich gestaltet sein.

Zur Veranschaulichung der Bauweise des Elektroladeschranks und der Anordnung elektrischer Komponenten und der Ausgestaltung einer passiven Kühlung sind in den Figuren 9 bis 12 einzelne Bauteile entfernt.

In Figur 12 ist erkennbar, dass der elektrische Stromanschluss 2, der hier beispielhaft zwei Schutzkontaktsteckdosen umfasst, in jedem Schrankfach 1 durch separate Schalter 35, insbesondere ein Fehlerstromschutzschalter (kurz: FI-Schalter) und ein Leitungsschutzschalter (kurz: LS-Schalter), abgesichert ist. Die Schutzkontaktsteckdosen 2 und die Schalter 35 sind im jeweiligen Schrankfach 1 an der linken Seitenwand 6 befestigt. Wie in den Figuren 11 und 12 erkennbar, können hierzu der elektrische Stromanschluss 2 und die Schalter 35 je Schrankfach 1 in einem Wandverteiler 36, der in der linken Seitenwand 6 eingesetzt, vorgesehen sein. In der Figur 10 ist erkennbar, dass seitlich an der Seitenwand 6 eine Verteiler-Klemmtasche 37 aufgesetzt sein kann, die die übereinander angeordneten Wandverteiler 36 und deren (nicht gezeigte) elektrische Verkabelung abdeckt. Die Verteiler-Klemmtasche 37 ist in den Figuren 11 und 12 entfernt. Weiterhin weist der Elektroladeschrank eine zentrale Verteilerbox 38 auf, über die die einzelnen elektrischen Stromanschlüsse 2 an eine externe Stromversorgung des Elektroladeschranks angeschlossen sein können. Die Verteilerbox 38 ist von außen an der Seitenwand 6 befestigt.

Ebenfalls an der linken Seitenwand 6 und benachbart zu den einzelnen Wandverteilern 36 sind in den Schrankfächern 1 Lüftungsschlitze 39 ausgebildet, die der passiven Kühlung der Schrankfächer 1 dienen. Die Lüftungsschlitze 39 sind übereinander angeordnet. In der Figur 9 ist erkennbar, dass der Elektroladeschrank weiterhin eine Seitenabdeckung 40 aufweist. Zwischen der Seitenabdeckung 40 und der linken Seitenwand 6 ist ein sich über die Höhe des Schrankkorpus 5 erstreckender Spalt gebildet, in den die einzelnen Lüftungsschlitze 39 münden, sodass der Spalt als Luftkanal 41 dient. In den Figuren 10 bis 12 ist die Seitenabdeckung 40 entfernt.

Der Elektroladeschrank weist weiterhin einen Sockel 42 auf, auf dem der Schrankkorpus 5 und die Seitenabdeckung 40 aufgestellt sind. In dem Sockel 42 können weitere elektrische Komponenten des Elektroladeschranks und/oder zumindest Teile der Stellvorrichtung 10 für die Fachtür 4 des untersten Schrankfachs 1 angeordnet sein.

In den Figuren 9 bis 12 ist weiter erkennbar, dass der Schrankkorpus 5 einen Deckel 43 aufweist, der von oben auf die Seitenwände 6, 7 und die Rückwand 8 aufgesetzt ist und den Schrankkorpus 5 nach oben hin abschließt. Des Weiteren weist der Elektroladeschrank ein Schrägdach 44 auf, das zur Öffnungsseite 3 des Schrankkorpus 5 einen Überstand als Regenschutz aufweist. Das Schrägdach 44 ist in der Figur 1 dargestellt und in den Figuren 9 bis 12 zur Veranschaulichung weiterer darunterliegender Details des Elektroladeschranks entfernt.

Um für Montage- und Wartungszwecke Zugang zu den elektrischen Komponenten des Elektroladeschranks zu ermöglichen, können mehrere (nicht gezeigte) Revisionsklappen vorgesehen sein.

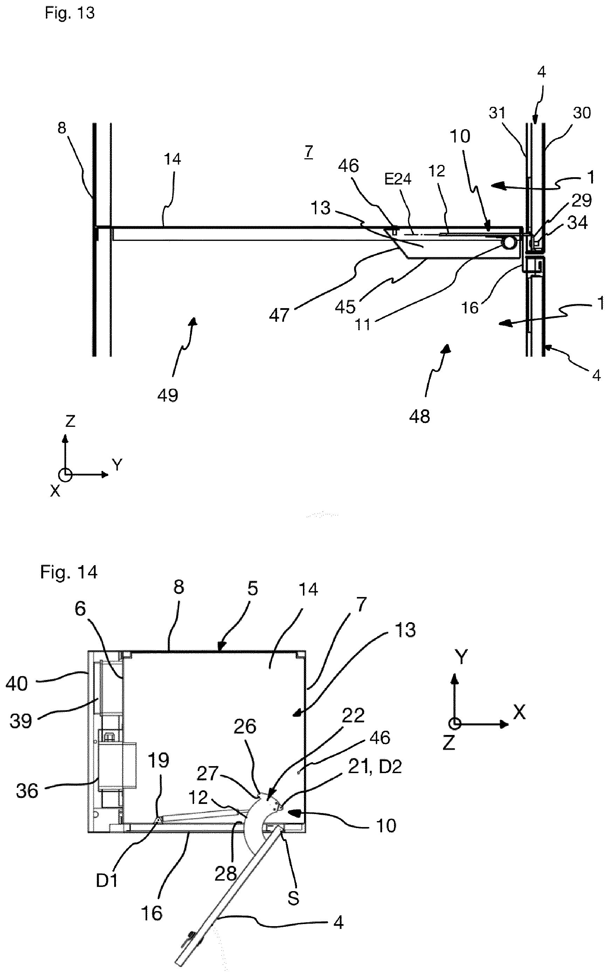

In der Figur 13 ist ein Elektroladeschrank gemäß einer weiteren Ausführungsform gezeigt, wobei nur eine vergrößerte Schnittansicht des Elektroladeschranks entlang der Raumachse Z, das heißt ein Längsschnitt, dargestellt ist. Der Elektroladeschrank entspricht weitestgehend demjenigen aus den Figuren 1 bis 12, sodass hinsichtlich der Gemeinsamkeiten auf die obige Beschreibung Bezug genommen wird. Dabei sind gleiche beziehungsweise abgewandelte Einzelheiten mit den gleichen Bezugszeichen versehen, wie in den Figuren 1 bis 12. Der einzige Unterschied besteht in der Ausgestaltung der Verkleidung. Bei dem Elektroladeschrank, wie in den Figuren 1 bis 12 gezeigt, ist die jeweilige Verkleidung ein Trennboden 15. Dagegen ist bei dem Elektroladeschrank, wie in der Figur 13 gezeigt, die jeweilige Verkleidung eine Abkastung 45, die von unten an den jeweiligen Fachboden 14 angesetzt und an diesem befestigt ist.

Die jeweilige Abkastung 45 kann mittels Niete 46 an dem Fachboden 14 befestigt sein. Ein der Rückwand 8 zugewandter Abschnitt 47 der jeweiligen Abkastung 45 kann schräg zum Fachboden 14 angestellt sein, wie in der Figur 13 gezeigt ist. Aufgrund der Ausgestaltung der Verkleidungen als Abkastungen 45 schließt das jeweilige Schrankfach 1 nach oben hin in einem vorderen Fachbereich 48 mit der Abkastung 45 und in einem hinteren Fachbereich 49 mit dem Fachboden 14 des darüber liegenden Schrankfachs 1 ab.

In der Figur 14 ist lediglich zur Verdeutlichung der Anordnung und Funktionsweise der Stellvorrichtung 10 der Fachboden 14 und die Abkastung 45 des Schrankfachs 1 ausgeblendet. Anhand der Niete 46 des darunter liegenden Schrankfachs 1 ist erkennbar, dass die Abkastungen 45 in der Tiefe derart dimensioniert sind, dass der jeweilige Hebel 12 ausreichend Arbeitsraum hat, um von der Offenstellung über die in der Figur 14 gezeigte Zwischenstellung in die Schließstellung, und vice versa, geschwenkt zu werden. Die Höhe des zwischen der Abkastung 45 und dem Fachboden 14 begrenzen Aufnahmeraums 13 kann, wie bereits im Zusammenhang mit dem Trennboden 15 beschrieben, etwa 20 Millimeter bis 60 Millimeter betragen.

### Bezugszeichenliste

- 1: Schrankfach
- 2: Stromanschluss
- 3: Öffnungsseite
- 4: Fachtür
- 5: Schrankkorpus
- 6: Seitenwand
- 7: Seitenwand
- 8: Rückwand
- 9: Scharnier
- 10: Stellvorrichtung
- 11: Federmittel
- 12: Hebel
- 13: Aufnahmeraum
- 14: Fachboden
- 15: Trennboden
- 16: Abdeckung
- 17: Zylinder
- 18: Kolben
- 19: Anlenkpunkt
- 20: Stützfläche
- 21: Anlenkpunkt
- 22: Endabschnitt
- 23: Durchbruch
- 24: Hebelabschnitt
- 25: Endabschnitt
- 26: Vorsprung
- 27: Anschlagfläche
- 28: Gegenfläche
- 29: Verbindungsstruktur
- 30: Außenwand
- 31: Innenwand
- 32: Schlitz
- 33: Bohrung
- 34: Niet
- 35: Schalter
- 36: Wandverteiler
- 37: Verteiler-Klemmtasche
- 38: Verteilerbox
- 39: Lüftungsschlitze
- 40: Seitenabdeckung
- 41: Luftkanal
- 42: Sockel
- 43: Deckel
- 44: Schrägdach
- 45: Abkastung
- 46: Niet
- 47: Abschnitt
- 48: Fachbereich
- 49: Fachbereich
- A: Aufstellfläche
- B: Breite
- E: Ebene
- M: Mittelpunkt
- R, r: Radius
- S: Schwenkachse
- X, Y, Z: Raumachsen

## Patentansprüche

1. Elektroladeschrank zum Laden von Akkumulatoren, insbesondere von E-Bikes, umfassend:
einen Schrankkorpus (5) aus Metall und mehrere übereinander liegende Schrankfächer (1), wobei zumindest eine Teilzahl der Schrankfächer (1) jeweils einen elektrischen Stromanschluss (2) und eine Fachtür (4) mit mindestens einer Stellvorrichtung (10) aufweist,
wobei die Stellvorrichtung (10) ein gegenüber dem Schrankkorpus (5) abgestütztes Federmittel (11) und einen an der Fachtür (4) abgestützten Hebel (12) aufweist, wobei das Federmittel (11) und der Hebel (12) miteinander verbunden sind und die Fachtüre (4) von dem Federmittel (11) in Schließrichtung beaufschlagt wird, wobei das Federmittel (11) in einem vom Schrankfach (1) abgetrennten Aufnahmeraum (13) ober- oder unterhalb eines Fachbodens (14) angeordnet ist, wobei der Aufnahmeraum (13) zu einer Öffnungsseite (3) des Schrankkorpus (5) von einer Abdeckung (16) verschlossen ist, die einen Durchbruch (23) für den Hebel (12) aufweist.

2. Elektroladeschrank nach Anspruch 1, **dadurch gekennzeichnet, dass** die Hebel (12) jeweils an einem außerhalb des Aufnahmeraums (13) liegenden Endabschnitt (25) eine Verbindungsstruktur (29) zum Befestigen des Hebels (12) an der jeweiligen Fachtür (4) aufweisen.

3. Elektroladeschrank nach Anspruch 2, **dadurch gekennzeichnet, dass** die Verbindungsstruktur (29) des jeweiligen Hebels (12) eine Abkantung umfasst, die in einen Schlitz (32) der jeweiligen Fachtür (4) eingesetzt und mit dieser fest verbunden ist.

4. Elektroladeschrank nach einem der Ansprüche 1 bis 3, **dadurch gekennzeichnet, dass** die Hebel (12) jeweils einen durch den Durchbruch (23) greifenden Hebelabschnitt (24) mit einer flachen Grundform aufweisen, und dass die Durchbrüche (23) schlitzförmig gestaltet sind.

5. Elektroladeschrank nach Anspruch 4, **dadurch gekennzeichnet, dass** der Hebelabschnitt (24) des jeweiligen Hebels (12) in einer Ebene (E24) der Grundform gebogen ausgestaltet ist.

6. Elektroladeschrank nach Anspruch 5, **dadurch gekennzeichnet, dass** der Hebelabschnitt (24) des jeweiligen Hebels (12) als Kreisringabschnitt ausgebildet ist, wobei ein Mittelpunkt des Kreisringabschnitts auf einer Schwenkachse (S) der jeweiligen Fachtür (4) liegt.

7. Elektroladeschrank nach einem der Ansprüche 1 bis 6, **dadurch gekennzeichnet, dass** zur Begrenzung eines Öffnungswinkels (α) der jeweiligen Fachtür (4) an dem jeweiligen Hebel (12) eine Anschlagfläche (27) ausgebildet ist, die in einer Offenstellung der jeweiligen Fachtür (4) an einer ortsfest zum Schrankkorpus (5) angeordneten Gegenfläche (28) anschlägt.

8. Elektroladeschrank nach Anspruch 7, **dadurch gekennzeichnet, dass** die Anschlagfläche (27) des jeweiligen Hebels (12) in einer Ebene (E27) und die jeweilige Fachtür (4) in einer Ebene (E4) liegen, wobei die beiden Ebenen (E4, E27) in einem Winkel zueinander stehen, der in vollständig geöffnetem Zustand der Fachtür betragsmäßig dem Öffnungswinkel (α) entspricht.

9. Elektroladeschrank nach einem der Ansprüche 1 bis 8, **dadurch gekennzeichnet, dass** die Federmittel (11) jeweils an einem ersten Anlenkpunkt (19) drehbar mit einer Stützfläche (20) des Schrankkorpus (5) und an einem zweiten Anlenkpunkt (21) drehbar mit dem jeweiligen Hebel (12) verbunden sind.

10. Elektroladeschrank nach Anspruch 9, **dadurch gekennzeichnet, dass** die jeweilige Anschlagfläche (27) entlang einer gedachten Geraden, die durch die beiden Anlenkpunkte (19, 21) des jeweiligen Federmittels (11) verläuft, stets zwischen den beiden Anlenkpunkten (19, 21) liegt.

11. Elektroladeschrank nach einem der Ansprüche 1 bis 10, **dadurch gekennzeichnet, dass** das jeweilige Federmittel (11) eine Gasdruckfeder ist.

## Claims

1. Electric charging cabinet for charging batteries, in particular for e-bikes, comprising:
a cabinet body (5) made of metal and a plurality of cabinet compartments (1) located one above the other, wherein at least some of the cabinet compartments (1) have an electrical power connection (2) and a compartment door (4) with at least one adjusting device (10),
wherein the adjusting device (10) comprises a spring means (11) supported against the cabinet body (5) and a lever (12) supported on the compartment door (4), wherein the spring means (11) and the lever (12) are connected to one another and the compartment door (4) is loaded in the closing direction by the spring means (11), wherein the spring means (11) is arranged in a receiving space (13) separated from the cabinet compartment (1) above or below a compartment floor (14), the receiving space (13) being closed towards an opening side (3) of the cabinet body (5) by a cover (16) which has an opening (23) for the lever (12).

2. Electric charging cabinet according to claim 1, **characterised in that** the levers (12) respectively comprise a connecting structure (29) on an end section (25) located outside the receiving space (13) for fastening the lever (12) to the respective compartment door (4).

3. Electric charging cabinet according to claim 2, **characterised in that** the connecting structure (29) of the respective lever (12) comprises a bent-over edge which is inserted into a slot (32) of the respective compartment door (4) and is firmly connected thereto.

4. Electric charging cabinet according to any one of claims 1 to 3, **characterised in that** the levers (12) each a have a lever section (24) with a flat basic shape that extends through the opening (23), and **in that** the openings (23) are slot-shaped.

5. Electric charging cabinet according to claim 4, **characterised in that** the lever section (24) of the respective lever (12) is curved in a plane (E24) of the basic shape.

6. Electric charging cabinet according to claim 5, **characterised in that** the lever section (24) of the respective lever (12) is formed as a segment of a circular ring, a center of the segment of the circular ring lying on a pivot axis (S) of the respective compartment door.

7. Electric charging cabinet according to any one of claims 1 to 6, **characterised in that**, to limit an opening angle (α) of the respective compartment door (4), a stop face (27) is formed on the respective lever (12), which stop face (27), in an open position of the respective compartment door (4), stops against a counter face (28) arranged in a fixed position relative to the cabinet body (5).

8. Electric charging cabinet according to claim 7, **characterised in that** the stop face (27) of the respective lever (12) lies in a plane (E27), and the respective compartment door (4) lies in a plane (E4), the two planes (E4, E27) being at an angle to one another which corresponds to the opening angle (α) when the compartment door is in the fully open state.

9. Electric charging cabinet according to any one of claims 1 to 8, **characterised in that** the spring means (11) are each rotatably connected to a supporting face (20) of the cabinet body (5) at a first pivot point (19) and are each rotatably connected to the respective lever (12) at a second pivot point (21).

10. Electric charging cabinet according to claim 9, **characterised in that** the respective stop face (27) always lies between the two articulation points (19, 21) along an imaginary straight line running through the two articulation points (19, 21) of the respective spring means (11).

11. Electric charging cabinet according to any one of claims 1 to 10, **characterised in that** the respective spring means (11) is a gas pressure spring.

## Revendications

1. Armoire de charge électrique pour charger des accumulateurs, en particulier de vélos électriques, comprenant :
un corps d'armoire (5) en métal et plusieurs compartiments d'armoire (1) superposés, au moins un nombre partiel des compartiments d'armoire (1) comportant chacun un raccordement électrique (2) et une porte de compartiment (4) avec au moins un dispositif de réglage (10),
le dispositif de réglage (10) comportant des moyens à ressort (11) s'appuyant sur le corps d'armoire (5) et un levier (12) s'appuyant sur la porte de compartiment (4), le moyens à ressort (11) et le levier (12) étant reliés l'un à l'autre, et la porte de compartiment (4) étant poussée par le moyen à ressort (11) dans le sens de la fermeture, le moyen à ressort (11) étant disposé dans un espace de réception (13) séparé du compartiment d'armoire (1), au-dessus ou au-dessous d'un tablette (14), l'espace de réception (13) étant fermé par un couvercle (16) sur un côté d'ouverture (3) du corps d'armoire (5), qui présente une ouverture (23) pour le levier (12).

2. Armoire de chargement électrique selon la revendication 1, **caractérisée en ce que** les leviers (12) présentent chacun, sur une section d'extrémité (25) située à l'extérieur de l'espace de réception (13), une structure de liaison (29) pour fixer le levier (12) à la respective porte de compartiment (4).

3. Armoire de chargement électrique selon la revendication 2, **caractérisée en ce que** la structure de liaison (29) du levier (12) respectif comprend un pliage qui est inséré dans une fente (32) de la respective porte de compartiment (4) et qui est relié fixement à celle-ci.

4. Armoire de chargement électrique selon l'une des revendications 1 à 3, **caractérisée en ce que** les leviers (12) présentent chacun une partie de levier (24) de forme plate qui s'engage à travers l'ouverture (23), et **en ce que** les ouvertures (23) sont configurés en forme de fente.

5. Armoire de chargement électrique selon la revendication **4, caractérisée en ce que** la partie de levier (24) du levier (12) respectif est courbée dans un plan (E24) de la forme de base.

6. Armoire de chargement électrique selon la revendication 5, **caractérisée en ce que** la partie de levier (24) du levier (12) respectif est réalisée sous la forme d'une section annulaire circulaire, un centre de la section annulaire circulaire étant situé sur un axe de pivotement (S) de la respective porte de compartiment (4).

7. Armoire de chargement électrique selon l'une des revendications 1 à 6, **caractérisée en ce que**, pour limiter un angle d'ouverture (α) de la respective porte de compartiment (4), une face de butée (27) est formée sur le levier (12) respectif est formée sur le levier respectif (12), laquelle vient buter, dans une position ouverte de la porte de compartiment (4) respective, contre une contre-face (28) disposée de manière fixe par rapport au corps d'armoire (5).

8. Armoire de chargement électrique selon la revendication 7, **caractérisée en ce que** la face de butée (27) du levier (12) respectif se trouve dans un plan (E27) et que la porte de compartiment (4) respective se trouve dans un plan (E4), les deux plans (E4, E27) formant entre eux un angle qui, lorsque la porte de complètement est complètement ouverte, correspond en valeur à l'angle d'ouverture (α).

9. Armoire de chargement électrique selon l'une des revendications 1 à 8, **caractérisée en ce que** les moyens ressorts (11) sont respectivement reliés de manière rotative à une face d'appui (20) du corps de l'armoire (5) en un premier point d'articulation (19) et de manière rotative au levier (12) respectif en un deuxième point d'articulation (21).

10. Armoire de chargement électrique selon la revendication 9, **caractérisée en ce que** la face de butée (27) respective se situe toujours entre les deux points d'articulation (19, 21) le long d'une ligne droite imaginaire qui passe par les deux points d'articulation (19, 21) du moyen de ressort (11) respectif.

11. Armoire de chargement électrique selon l'une des revendications 1 à 10, **caractérisée en ce que** le moyen de ressort (11) respectif est un ressort à gaz.
